# EUROPÄISCHE PATENTANMELDUNG

(11) **EP 1 241 545 A2**
(43) Veröffentlichungstag der Anmeldung: **18.09.2002**
(21) Anmeldenummer: 02005905.1
(22) Anmeldetag: 14.03.2002
(51) Int. Cl.: G05B 19/05

(54) **Verfahren und Vorrichtung zur Anordnung von Datenobjekten in einer Datenverarbeitungsanlage**

(30) Priorität: 15.03.2001 DE 10112508
(71) Anmelder: SIEMENS AKTIENGESELLSCHAFT, 80333 München (DE)
(72) Erfinder: Klose, Ralf, 90518 Altdorf (DE); Rupprecht, Georg, 90409 Nürnberg (DE)

(57) **Zusammenfassung**

Die Erfindung betrifft ein Verfahren und eine Vorrichtung zur Anordnung von Datenobjekten in visualisierten Plänen zur programmgesteuerten Abarbeitung von Daten in einer Datenverarbeitungsanlage. Die mit den Datenobjekten verbundenen Daten können dabei an verschiedenen Programmstellen derart ausgewertet werden, dass logisch eindeutige Verweise zu einer Speicheradresse der Datenobjekte in der Datenverarbeitungsanlage erzeugt werden, so dass von unterschiedlichen Programmstellen ein Zugriff auf diese Datenobjekte und eine Echtzeiterfassung, -auswertung und/oder -beobachtung unterschiedlicher Zusammenstellungen der Datenobjekte durchführbar sind.

## Beschreibung

Die Erfindung betrifft ein Verfahren und eine Vorrichtung zur Anordnung von Datenobjekten in visualisierten Plänen zur programmgesteuerten Abarbeitung von Daten in einer Datenverarbeitungsanlage, insbesondere für ein Automatisierungssystem zur Steuerung oder Regelung eines technischen Prozesses.

Bei vielen Datenverarbeitungsprogrammen wird auf Daten zugegriffen, die einerseits hierarchisch strukturiert sein können, andererseits aber auch eine willkürliche Parallelität hinsichtlich des Speicherorts oder der Zuordnung zu Bausteinen des Programms aufweisen können. Beispielsweise sind bei herkömmlichen Datenverarbeitungssystemen bestimmte Daten nach Vorlagen, externen oder internen Dokumenten oder auch unter beliebigen anderen Gesichtspunkten gruppiert. Für das Gruppieren werden im einfachsten Fall Kopien der benötigten Daten zusammen abgespeichert, was aber in der Folge zu Konsistenzproblemen bei einer Änderung der Daten an jeweils einem Speicherort führen kann. Es ist andererseits auch üblich, dass Verknüpfungen erstellt werden, die zumindest die Redundanz der an unterschiedlichen Orten abgespeicherten Daten vermeiden. Bei Änderungen am Original der gespeicherten Daten könnte hierbei jedoch die Beziehung der an verschiedenen Orten gespeicherten Daten verloren gehen.

Der Erfindung liegt daher die Aufgabe zugrunde, ein Verfahren und eine Vorrichtung zur Anordnung von Datenobjekten in visualisierten Ablaufplänen zur programmgesteuerten Abarbeitung von Daten in einer Datenverarbeitungsanlage zu schaffen, bei dem auf Daten oder eine Auswahl von Daten bei einfacher Bearbeitbarkeit aus unterschiedlichen Programmstellen oder Programmordnern zugegriffen werden kann.

Gemäß der Erfindung ist ein Verfahren, ein Software-Modul oder eine entsprechend aufgebaute Datenverarbeitungsanlage in einer Vorrichtung der eingangs genannten Art in vorteilhafter Weise so weitergebildet, dass die gestellte Aufgabe gelöst wird. Mit der Erfindung ist es auf einfache Weise ermöglicht, dass die mit den Datenobjekten verbundenen Daten an verschiedenen Programmstellen der Ablaufpläne derart ausgewertet werden, dass logisch eindeutige Verweise zu einer Speicheradresse der Datenobjekte in der Datenverarbeitungsanlage erzeugt werden, so dass von unterschiedlichen Programmstellen ein Zugriff auf diese Datenobjekte und eine Echtzeiterfassung, -auswertung und/oder -beobachtung unterschiedlicher Zusammenstellungen der Datenobjekte durchführbar sind.

Besonders vorteilhaft ist es, wenn die unterschiedlichen Zusammenstellungen in den graphischen Darstellungselementen als Baumdarstellung bzw. als so genannte Beobachtungsbäume dargestellt werden, die innerhalb der Programmbibliotheken erzeugt werden.

Wie eingangs erwähnt, können bei herkömmlichen Datenverarbeitungssystemen bestimmte Daten nach Vorlagen, externen oder internen Dokumenten oder auch unter beliebigen anderen Gesichtspunkten gruppiert worden sein. Mit der erfindungsgemäßen Zusammenführung von Datenobjekten über logische Verweise bzw. invariante Referenzverknüpfungen werden in vorteilhafter Weise Konsistenzprobleme bei Änderungen der Daten der Objekte vermieden. Insbesondere ist dies vorteilhaft, wenn die Daten oder eine Auswahl davon unter einem jeweils anderen Blickwinkel betrachtet werden sollen.

Mit einer vorteilhaften Ausführungsform der Erfindung ist es möglich, dass in solchen Zusammenstellungen von Datenobjekten, die Variablen mit veränderbaren Werten aufweisen, die Werte gemeinsam in einem Schritt oder durch automatisch aufeinander folgende Schritte verändert werden können. Die Zuordnung anderer Werte oder auch Eigenschaften (wie z. B.

True oder False) ist bisher nur üblich, falls ein expliziter Sichtwechsel, beispielsweise durch eine bestimmte Menüwahl, erfolgt und nicht, wenn wie nach der Erfindung in ein und derselben Darstellung für verschiedene Programmteile implizit unterschiedliche Sichten gezeigt werden.

Weiterhin ist vorteilhaft, dass die logisch eindeutigen Verweise so aufgebaut sind, dass sie invariant gegenüber Namensänderungen und Ortsverschiebungen beim jeweils originalen Datenobjekt sind.

Ein Software-Modul zur Durchführung des zuvor genannten Verfahrens ist folglich so aufgebaut, dass ein Programmbefehl vorhanden ist, mit dem die mit den Datenobjekten verbundenen Daten an verschiedenen Programmstellen der Ablaufpläne derart ausgewertet werden, dass logisch eindeutige Verweise zu einer Speicheradresse der Datenobjekte in der Datenverarbeitungsanlage erzeugt werden, so dass von unterschiedlichen Programmstellen ein Zugriff auf diese durchführbar ist. In der entsprechenden Vorrichtung ist dazu ein programmgesteuertes Automatisierungsgerät, ein Eingabegerät und eine Anzeigevorrichtung zur Anzeige der graphischen Darstellungselemente vorhanden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird anhand des in der Zeichnung dargestellten Ausführungsbeispiels erläutert. Es zeigen:
- Figur 1: eine Darstellung eines Ablaufplans für eine Steuerungsaufgabe mit symbolisch dargestellten Schaltvorgängen und den zugehörigen Fortschaltbedingungen,
- Figur 2: eine Baumdarstellung von Operanden für die Steuerungsaufgabe nach der Figur 1 mit einem zusätzlich eingerichteten Ordner für eine Auswahl dieser Operanden und
- Figur 3: eine Tabelle mit Kennzeichnungen einer Auswahl von Operanden des Ordners nach der Figur 2.

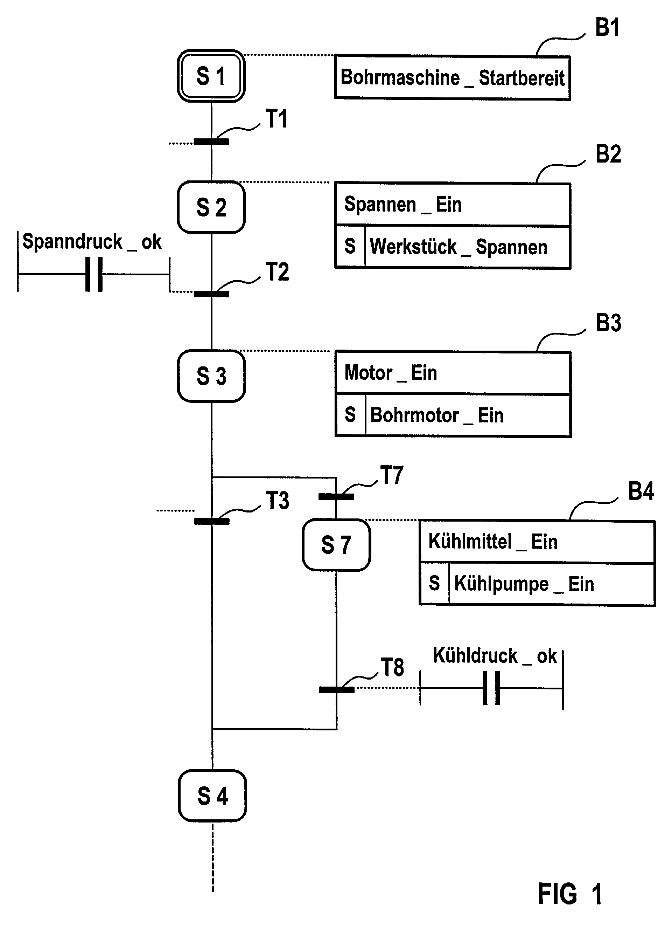

In Figur 1 ist die graphische Darstellung eines Ablaufplans zur Beschreibung einer Ablaufsteuerung für einen industriellen Prozess gezeigt, hier beispielsweise für eine Bohrmaschinensteuerung, die in einem Fertigungsprozess einsetzbar ist. Die eigentliche Steuerungsaufgabe wird mit einer entsprechenden nicht dargestellten Datenverarbeitungsanlage, hier ein programmgesteuertes Automatisierungsgerät, abgearbeitet, wobei auf die Funktion dieser Datenverarbeitungsanlage zum Verständnis der Erfindung nicht näher eingegangen werden braucht. Die folgende Beschreibung des Ablaufplans ist nur beispielhaft, da die Art der Programmierung hier nicht von Bedeutung ist. Dies könnte auch mit einem Kontaktplan (KOP), als Zustandsgraph oder in einer Textform, z. B. in SCL (SCL = Structured Code Language), oder Ähnlichem realisiert sein.

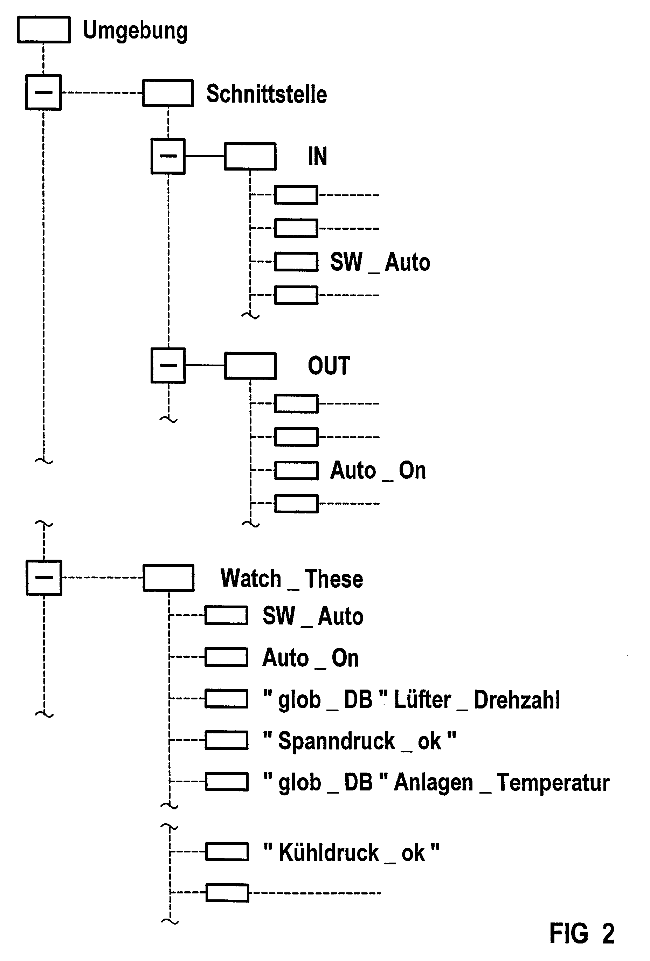

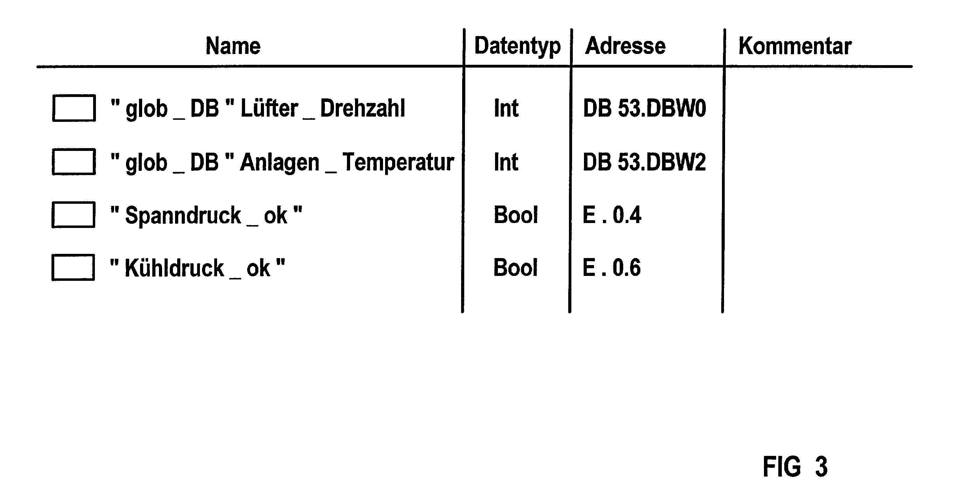

Die anhand der Figur 1 beispielhaft im Kontext eines Ablaufplans erläuterte erfindungsgemäße Ausführung kann in der hier gezeigten Weise Bestandteil einer Bildschirmdarstellung auf einer an sich bekannten Anzeigevorrichtung sein, wobei in dieser Bildschirmdarstellung noch weitere graphische Abbilder der Programmorganisation und ggf. Auflistungen von Operanden, Variablen oder sonstigen Zustandsgrößen enthalten sein können, die anhand von Figur 2 und Figur 3 erläutert werden.

Mit den in der Figur 1 auszugsweise dargestellten Schaltvorgängen S1 bis S4 und S7 sind programmierbare Schritte beschrieben, die mit gerichteten Verbindungen über Transitions- oder Fortschaltbedingungen T1 bis T3 sowie T7 und T8 miteinander verknüpft sind, wobei hier auch nur eine auszugsweise Darstellung erfolgt, soweit sie für das Verständnis der Erfindung notwendig ist.

Neben den Schaltvorgängen S1 bis S3 sind in separaten Blöcken B1, B2, B3 und B4 der graphischen Darstellung auf einem Bildschirm weitere die Schaltvorgänge betreffende Aktionen angegeben. Zu S1 wird hier die Bohrmaschine startbereit (Block B1); zu S2 wird das Spannen für das Bohrfutter eingeleitet (Block B2) und der Befehl "Werkstück_Spannen" verarbeitet; zu S3 wird das Einschalten des Motors der Bohrmaschine eingeleitet und der Befehl "Bohrmotor_Ein" verarbeitet (Block B3); zu S7 wird das Einschalten der Kühlmittelpumpe der Bohrmaschine eingeleitet und der Befehl "Kühlpumpe_Ein" verarbeitet (Block B4).

Die Fortschaltbedingungen sind hier nur beispielhaft für T2 nach dem Vorgang "Werkstück_Spannen" mit "Spanndruck_ok" und für T8 nach dem Vorgang "Kühlpumpe_Ein" mit "Kühldruck_ok" angegeben.

In der in der Figur 2 gezeigten Bildschirmdarstellung kann man auch noch zusätzlich zur Darstellung nach dieser Figur das auszuführende Programm, hier den Ablaufkettenbaustein "Bohrprogramm", in einer gewohnten Baumdarstellung zeigen, wobei die komplette Umgebung dieses Bausteins mit entsprechenden Programmsymbolen oder Textkennzeichnungen für die Schnittstellen mit Parametern und Lokaldaten, der Bausteincontainer mit allen anderen verfügbaren Programmbausteinen, die Globalsymbolik bzw. symbolisch ansprechbare fixe Hardwareadressen und die vorhandenen Programmbibliotheken dargestellt sein können.

In diese angezeigte Programmumgebung nach der Figur 2 kann nun der Anwender beispielsweise direkt unterhalb vom Programmsymbol für die Programmumgebung einen neuen Ordner mit einem entsprechend wählbaren Namen, hier z. B. "Watch_These", einfügen, in den die Verweise für die Operanden abgelegt werden, mit denen eine Echtzeiterfassung, -auswertung und/oder -beobachtung unterschiedlicher Zusammenstellungen der in den Figuren 1 und 2 gezeigten Operanden möglich sind. Nur z. B. ist hier der Eingangsparameter "SW_Auto" und der Ausgangsparameter "Auto_On" über einen Verweis in den Ordner "Watch_These" aus der Baumdarstellung für die Umgebungsvariablen heruntergezogen. Das Gleiche gilt für die globalen Symbole für den Spanndruck und den Kühldruck sowie für die globalen Daten für die Lüfterdrehzahl und die Anlagentemperatur, die ebenfalls aus dem Baum oberhalb des Ordners "Watch_These" heruntergezogen worden sind.

Somit sind unterschiedliche Zusammenstellungen von Datenobjekten oder deren Daten in der graphischen Baumdarstellung als so genannte Beobachtungsbäume möglich, wobei diese Zusammenstellung sitzungsübergreifend gespeichert werden kann. Das erfindungsgemäße Verfahren ermöglicht somit, dass logisch zusammengehörende Variablen in einer Gruppe zusammengefasst werden können, auch wenn die Ablageorte der einzelnen Variablen in einem ursprünglichen Ablaufplan unterschiedlich sind. Durch diese Verfahrensmerkmale werden keine eigenständigen Variablen erzeugt, sondern es werden vielmehr nur die erfindungsgemäßen logisch eindeutigen Verweise auf die bestehenden Originale eingefügt. Dies hat den Vorteil, dass bei Änderungen am Original der entsprechende Verweis immer aktuell ist und damit die Daten invariant gegenüber Namensänderungen und Ortsverschiebungen beim Originalobjekt sind.

In der Liste nach der Figur 3 sind die globalen Symbole und Daten im Ordner "Watch_These" aus der Figur 2 noch mit ihren Datentypen und Adressen sowie evtl. mit einem zusätzlichen Kommentar dargestellt. Hierbei sind auch noch andere Zusammenstellungen der Anzeige in entsprechenden Listen möglich, wie z. B. die Anzeige des Anzeigeformats, z. B. "HEX" oder "BOOL", und die Anzeige eines jeweiligen Anfangs-, Status- oder Steuerwerts.

Anhand des Ausführungsbeispiels nach den Figuren könnten somit die Variablen "Spanndruck_ok" und "Kühldruck_ok" zusammen mit den globalen Variablen, wie z. B. "Lüfter_Drehzahl" und "Anlage_Temperatur", oder auch anderen beliebigen Ein- oder Ausgabeparametern, die an ganz anderen Ablageorten im Programm gespeichert sind, zusammengefasst werden. Wesentlich ist hierbei, dass diese Gruppen nicht als Kopien zum Erstellungszeitpunkt entstehen und damit spätere Änderungen an den Ausgangsdaten nicht erkannt würden, sondern nur Verweise bzw. Referenzen auf die Daten bereitgestellt werden. Für das beschriebene Beispiel bedeutet das, dass z. B. eine Änderung des Eingangswertes für "Kühldruck_ok" automatisch auch in dieser Statusgruppierung sicht- und auswertbar würde.

In einem anderen Anwendungsfall könnten z. B. in einer Gruppierung verschiedene booleschen Variablen einer Schnittstelle enthalten sein, wobei es auch hier unbedeutend ist, in welcher Programmsektion diese physikalisch vorhanden sind. In einem zweiten Schritt kann man dann an den Gruppierungselementen gewünschte Eigenschaften für diese Gruppe spezifizieren. Dies kann natürlich auch schon per Definition an diesem Gruppierungselement voreingestellt sein. Durch Selektion und Zusammenführung dieser Variablen wäre es nun z. B. in einem zweiten Schritt möglich, den Initialwert für alle gleichzeitig auf einen booleschen Wert (z. B. FALSE) zu setzen, wobei dies auch für alle Datentypen funktioniert. Im zweiten Schritt kann man dann an den Gruppierungselementen die gewünschten Eigenschaften für diese Sicht spezifizieren. Dies kann natürlich auch schon per Definition an diesem Gruppierungselement voreingestellt sein.

## Patentansprüche

1. Verfahren zur Anordnung von Datenobjekten in visualisierten Plänen zur programmgesteuerten Abarbeitung von Daten in einer Datenverarbeitungsanlage, **dadurch gekennzeichnet, dass** die mit den Datenobjekten verbundenen Daten an verschiedenen Programmstellen derart ausgewertet werden, dass logisch eindeutige Verweise zu einer Speicheradresse der Datenobjekte in der Datenverarbeitungsanlage erzeugt werden, so dass von unterschiedlichen Programmstellen ein Zugriff auf diese Datenobjekte und eine Echtzeiterfassung, -auswertung und/oder -beobachtung unterschiedlicher Zusammenstellungen der Datenobjekte durchführbar sind.

2. Verfahren nach Anspruch 1, **dadurch gekennzeichnet, dass** die unterschiedlichen Zusammenstellungen (Watch_These) in den graphischen Darstellungselementen als Baumdarstellung oder in anderer vergleichbarer Weise strukturiert dargestellt werden, wobei diese Darstellungen innerhalb der Programmbibliotheken erzeugt werden.

3. Verfahren nach Anspruch 1 oder 2, **dadurch gekennzeichnet, dass** in Zusammenstellungen von Datenobjekten, die Variablen mit veränderbaren Werten aufweisen, die Werte gemeinsam in einem Schritt oder durch automatisch aufeinander folgende Schritte verändert werden.

4. Verfahren nach einem der vorhergehenden Ansprüche, **dadurch gekennzeichnet, dass** die logisch eindeutigen Verweise so aufgebaut sind, dass sie invariant gegenüber Namensänderungen und Ortsverschiebungen beim jeweils originalen Datenobjekt sind.

5. Software-Modul für eine Datenverarbeitungsanlage zur Durchführung des Verfahrens nach einem der vorhergehenden Ansprüche, **dadurch gekennzeichnet, dass** ein Programmbefehl vorhanden ist, mit dem die mit den Datenobjekten verbundenen Daten an verschiedenen Programmstellen derart ausgewertet werden, dass logisch eindeutige Verweise zu einer Speicheradresse der Datenobjekte in der Datenverarbeitungsanlage erzeugt werden, so dass von unterschiedlichen Programmstellen ein Zugriff auf diese durchführbar ist.

6. Vorrichtung mit einer Datenverarbeitungsanlage, die ein Software-Modul nach Anspruch 5 zur Durchführung des Verfahrens nach einem der Ansprüche 1 bis 4 aufweist, **dadurch gekennzeichnet, dass** in der Vorrichtung ein programmgesteuertes Automatisierungsgerät, ein Eingabegerät und eine Anzeigevorrichtung zur Anzeige der graphischen Darstellungselemente vorhanden sind.
